# EUROPEAN PATENT APPLICATION

(11) **EP 4 711 478 A1**
(43) Date of publication of application: **18.03.2026**
(21) Application number: 25198833.3
(22) Date of filing: 28.08.2025
(51) Int. Cl.: C21D 1/30, B21D 19/08, B21D 28/02, B21D 28/26, B21D 37/16, C21D 1/42, C21D 9/00, C21D 9/46, H05B 6/10

(54) **PROCESSING METHOD**

(30) Priority: 12.09.2024 JP 2024157924
(71) Applicant: TOYOTA JIDOSHA KABUSHIKI KAISHA, Toyota-shi, Aichi-ken 471-8571 (JP)
(72) Inventor: IHARA, Tomoaki, Toyota-shi, 471-8571 (JP)
(74) Representative: D Young & Co LLP

(57) **Abstract**

To locally heat only a trim edge. A processing method includes: punching a steel plate; and heating an end face of a heating coil by disposing the heating coil in a non-contact manner along an end surface of a trim edge of the steel plate formed in the punching and perpendicular to a plate thickness direction of the steel plate and applying a current through the heating coil to cause an induced electromotive force on the steel plate. The heating coil is configured by winding a coil wire spirally at least one time.

## Description

### BACKGROUND

The present disclosure relates to a method for processing a steel plate.

A processing method is known in which a steel plate is punched and the vicinity of the trim edge is annealed by induction heating by a heating coil (see, for example, Patent Literature 1).

[Patent Literature 1] Japanese Unexamined Patent Application Publication No. 2001-323318

### SUMMARY

In the above-mentioned processing method, as a heating coil is heated not only in the vicinity of the trim edge but also over a wider range, deterioration of the steel plate can be of a concern.

The present disclosure has been made in order to solve such a problem, and a main object thereof is to provide a processing method adapted to locally heat only a trim edge.

In an aspect of the present disclosure to achieve the above object, a processing method includes:
punching a steel plate; and
heating an end face of a heating coil by disposing the heating coil in a non-contact manner along an end surface of a trim edge of the steel plate formed in the punching and perpendicular to a plate thickness direction of the steel plate and applying a current through the heating coil to cause an induced electromotive force on the steel plate,
in which the heating coil is configured by winding a coil wire spirally at least one time.

In this aspect,
a distance between the heating coil and the steel plate may be smaller than a diameter of the coil wire.

In this aspect,
the diameter of the coil wire of the heating coil may be larger than the thickness of the steel plate.

In this aspect,
a hole may be formed in the steel plate by punching the steel plate in the punching, and
a winding start position of the heating coil and a winding end position of the heating coil may be located on a line passing through a center of the hole and on the same side with respect to the center.

In this aspect,
a hole may be formed in the steel plate by punching the steel plate in the punching, and
an outer diameter of the heating coil may be larger than a diameter of the hole of the steel plate.

According to the present disclosure, it is possible to provide a processing method adapted to locally heat only a trim edge.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a schematic diagram schematically showing steps of a processing method according to an embodiment;
Fig. 2 is a diagram schematically showing a configuration of an induction heating apparatus according to an embodiment;
Fig. 3A and 3B are a side view and a top view showing a configuration of the heating coil;
Fig. 4A and 4B are a diagram showing the analysis results of CAE analysis;
Fig. 5 is a diagram showing an example of a heating jig; and
Fig. 6 is a diagram showing the state in which a heating step according to an embodiment is carried out in an idling step.

### DESCRIPTION OF EMBODIMENTS

### First Embodiment

Hereinafter, the present disclosure will be described through this embodiment, but the disclosure according to the claims is not limited to the following embodiments. Furthermore, all of the configurations described in this embodiment are not necessarily indispensable as a means to solve the problem.

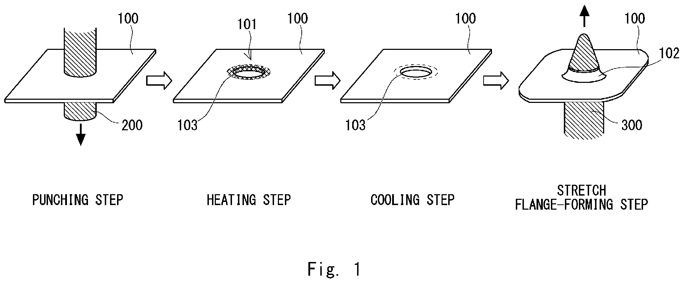

Fig. 1 is a schematic diagram schematically showing steps of a processing method according to this embodiment. In the processing method described below, for example, a substantially circular hole 101 is provided in a steel plate 100 as a work, and a stretch flange 102 is formed by deforming a periphery of the hole 101.

As shown in Fig. 1, for example, the processing method according to this embodiment includes a punching step of punching the steel plate 100, a heating step of heating a trim edge 103, a cooling step of reducing the heat generated in the heating step, and a processing step of forming the stretch flange 102 at the trim edge 103.

The punching step includes punching the steel plate 100 fixed to a punching die (not shown) by a punch 200. As will be described in detail later, the heating step is a step of heating the trim edge 103 formed in the punching step.

In the heating step, the punched steel plate 100 is disposed on a heating jig to be described later. Next, high-frequency induction heating is performed on the trim edge 103 of the steel plate 100. After the heating, the steel plate 100 is removed from the heating jig.

As shown in Fig. 1, the cooling step is a step of reducing the heat of the trim edge 103 heated in the heating step. Specifically, the steel plate 100 is left for a certain time in a room temperature environment. The stretch-flange formation step (burring step) is a step of inserting the flange mold 300 in the hole 101 and forming the stretch flange 102 by plastically deforming the peripheral edge part of the hole 101.

Residual strain generated at the peripheral edge part of the hole 101 in the punching step is removed in the heating step. Since a processing step is introduced after the stretch flange forming step, it is possible to reduce the damage caused by a flange die 300 more than when the processing is performed on the steel plate 100 in a heated state. In particular, in this embodiment, as described later, since the trim edge 103 can be locally heated, the residual strain can be satisfactorily removed, and the heating efficiency is also improved.

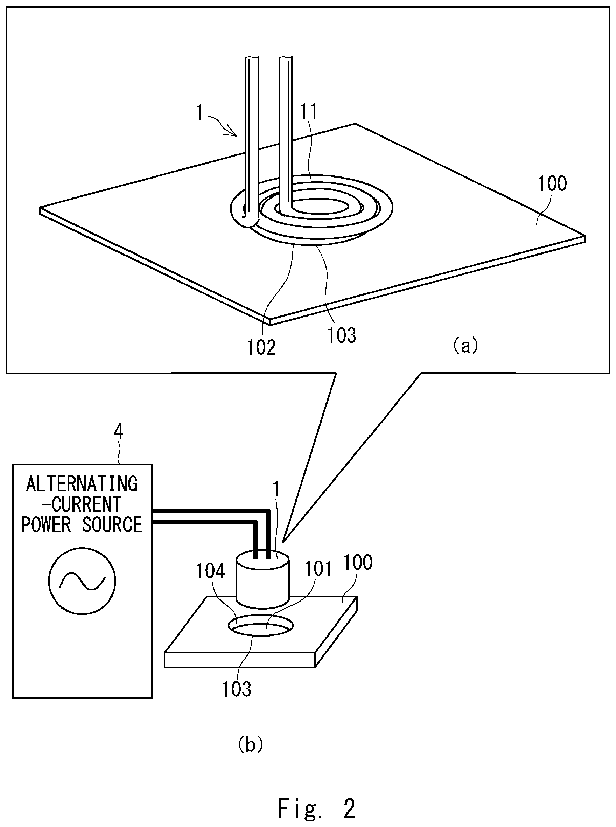

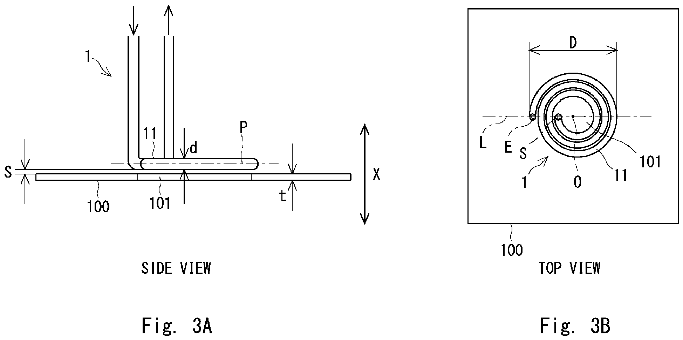

Next, the induction heating method performed in the heating step according to this embodiment will be described in detail with reference to Figs. 2 and 3. Fig. 2 is a schematic diagram showing a configuration of the induction heating apparatus according to this embodiment. Fig. 3 is a side view and a top view showing a configuration of a heating coil.

As shown in Fig. 3A, a heating coil 1 is disposed in a non-contact manner along an end surface 104 of the trim edge 103 formed in the punching step. Further the heating coil 1 is disposed in such a manner that the horizontal plane P in which the heating coil 1 is present is substantially perpendicular to the plate thickness direction X of the steel plate 100. In other words, the heating coil 1 is disposed in such a manner that the horizontal plane P in which the heating coil 1 is present is substantially parallel to the steel plate 100.

As shown in Fig. 2 (b), the end surface 104 of the trim edge 103 is heated by applying a current from an alternating-current power source 4 or the like to the heating coil 1 to generate an induced electromotive force on the steel plate 100. The alternating-current power source 4 outputs a current of approximately 450A at a high-frequency of approximately 220kHz.

As shown in Fig. 3B, the heating coil 1 is configured by winding a coil wire 11 spirally at least one time so that the diameter of the heating coil 1 is enlarged. The heating coil 1 is configured by winding the coil wire 11, for example, four times, but the number of windings of the coil wire 11 is not limited thereto. By increasing the number of windings of the coil wire 11 of the heating coil 1, a larger induced electromotive force can be generated in the steel plate 100 and the end surface 104 of the trim edge 103 can be heated more strongly.

As shown in Fig. 3A, the diameter d of the coil wire 11 of the heating coil 1 is preferably larger than the plate thickness t of the steel plate 100 (d>t). For example, in the case where the plate thickness t of the steel plate 100 is 2.9 mm, the diameter d of the coil wire 11 is about 5 mm. Thus, the more the current is applied to the heating coil 1, and the larger the induced electromotive force generated in the steel plate 100 can be.

As shown in Fig. 2, the trim edge 103 of the steel plate 100 is formed in a circular hole shape. Thus, in the case where the trim edge 103 has a substantially circular hole shape, the induced current flowing to the end surface 104 forms a connected loop shape, and therefore, heating can be performed more efficiently.

As shown in Fig. 3B, it is preferable that the winding start position S of the heating coil 1 and the winding end position of the heating coil E of the heating coil 1 are located on the line L passing through the center O of the hole 101 and on the same side with respect to the center O. As a result, since the number of windings is equal in any cross section when the heating coil 1 is cut in vertical direction, a stable magnetic field can be easily obtained.

As shown in Fig. 3B, the outer diameter D of the heating coil 1 is preferably larger than the diameter of the hole 101 of the steel plate 100. For example, in the case where the diameter of the hole 101 of the steel plate 100 is 50 mm, the outer diameter D of the heating coil 1 is about 62.5 mm. As a result, since the end surface 104 of the trim edge 103 of the steel plate 100 is located just below the coil wire 11 of the heating coil 1, a larger induced electromotive force can be generated in the steel plate 100 and the end surface 104 of the trim edge 103 can be heated more strongly. The outer diameter D of the heating coil 1 is preferably larger than the diameter of the hole 101 of the steel plate 100 and smaller than (a diameter of the hole 101 + a diameter d of the coil wire 11 ×3).

As shown in Fig. 3A, the distance s between the lower surface of the heating coil 1 and the steel plate 100 is preferably smaller than the diameter d of the coil wire 11. Furthermore, the distance s between the lower surface of the heating coil 1 and the steel plate 100 is preferably smaller than the diameter d of the coil wire 11 of the heating coil 1 and preferably as small as possible in a range that does not cause sparks. For example, in the case where the diameter d of the coil wire 11 of the heating coil 1 is 5 mm, the distance s between the heating coil 1 and the steel plate 100 is about 2.9 mm.

By moving the heating coil 1 closer to the end surface 104 of the trim edge 103 of the steel plate 100 in a range that does not cause sparks, a larger induced electromotive force can be generated in the steel plate 100 and the end surface 104 of the trim edge 103 can be heated more strongly.

The heating coil 1 may be covered with an insulator. In this case, the heating coil 1 covered with an insulator may be slightly in contact with the steel plate 100.

The heating temperature by the heating coil 1 is adjusted in such a way that the end surface 104 of the trim edge 103 becomes, for example, 200°C or higher and lower than the Ac1 point. The residual strain can be appropriately removed when the heating is within this temperature range. In particular, when the steel plate 100 is heated to the Ac1 point or higher, the steel plate 100 undergoes austenite transformation causing the steel plate 100 to soften when air-cooled or harden when rapidly cooled by running water or the like, and therefore formability in the stretch flange-forming step decreases. Therefore, it is desirable to keep the heating temperature below the Ac1 point.

In this embodiment, the heating coil 1 is arranged on the front side (the upper side) of the steel plate 100, but it is not limited thereto, and it may be arranged on the back side (the lower side) of the steel plate 100, or both sides of the front side and the back side of the steel plate 100.

Next, the analysis results of CAE (computer-aided engineering) analysis performed by the above-mentioned induction heating method in the heating step will be described.

As CAE analysis conditions, the outer diameter of the heating coil 1 is 62.5 mm, the diameter of the coil wire 11 is 5 mm, the distance d between the heating coil 1 and the steel plate 100 is 1 mm, and the plate thickness of the steel plate 100 is 2.9 mm.

The steel plate 100 is a 980MP class steel plate, and the longitudinal and lateral dimensions are 150 mm×150 mm. The hole 101 with a diameter of 50 mm is formed by punching out roughly the center of the steel plate 100. The current value of the alternating-current power source 4 is 450 A, and the frequency is set to 220 kHz. CAE analysis is a coupled analysis of frequency response analysis and thermal analysis, and the mesh is hexa-mesh (hexahedron).

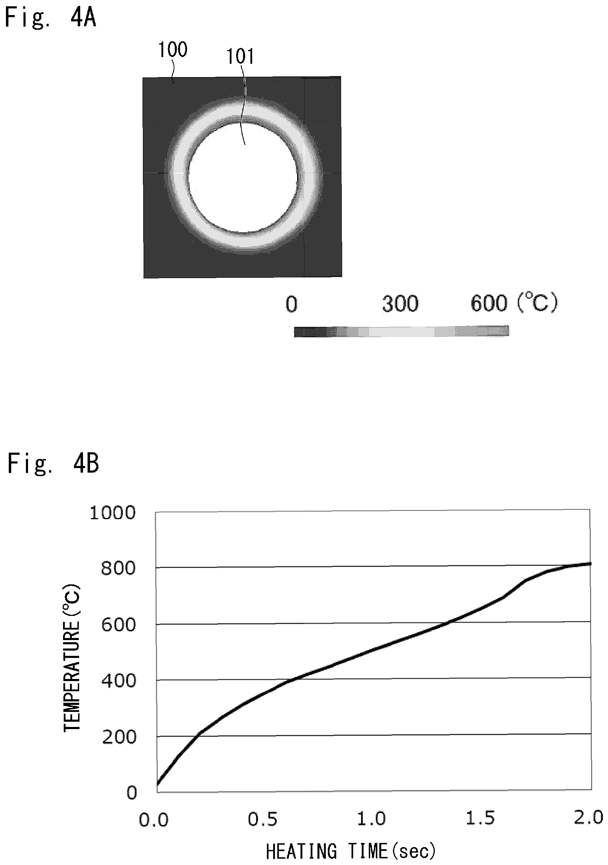

Fig. 4 is a diagram showing the analysis results when CAE analysis is performed under the above conditions. Fig. 4A is a diagram showing the temperature distribution of the steel plate 100 after one second of heating. Fig. 4 B is a diagram showing the relationship between the temperature of the end surface 104 of the trim edge 103 of the steel plate 100 and the heating time.

As shown in Fig. 4A, in the induction heating method according to this embodiment, only the vicinity of the end surface 104 of the trim edge 103 of the steel plate 100 can be heated intensively. As shown in Fig. 4B, according to the induction heating method according to this embodiment, the vicinity of the end surface 104 of the trim edge 103 of the steel plate 100 can be heated to the target temperature in a short time (about 2 to 3 seconds).

Next, an example of a formed product produced by the processing method according to this embodiment will be described. A formed product produced by the processing method according to this embodiment is, for example, a formed product including a stretch flange-formed part, such as a hole spreading part for spreading the hole and a flange forming part for erecting a curved flange, and a formed product including a formed part where a line length of the end surface is significantly increased after machining.

As a specific formed product, an FR lower arm used for vehicle suspension is assumed. The FR lower arm bush press-fitting part and the flange-formed part such as the hole spreading part such a working hole and a crotch may be formed by the processing method according to this embodiment.

In the processing method described above, the case where the hole 101 is provided in the steel plate 100 is described as an example, but the punching step of punching the steel plate 100 is not limited to the case where the hole 101 is provided, and unnecessary part of the steel plate may be cut off. In the stretch flange-forming step, the stretched flange may be formed by pressing the flange die 300 against the trim edge 103 where the unnecessary part is cut off. As described below, the flange-formed part of an A-pillar lower part or a B-pillar outer lower part is formed in this way.

The A-pillar lower part used for the window column of a vehicle is assumed as the above formed product. The flange-formed part such as a corner part of the A-pillar lower part may be formed by the processing method according to this embodiment. As another formed product, the B-pillar outer lower part of the vehicle is assumed. The flange-formed part such as a corner part of the B-pillar lower part may be formed by the processing method according to this embodiment.

### Second Embodiment

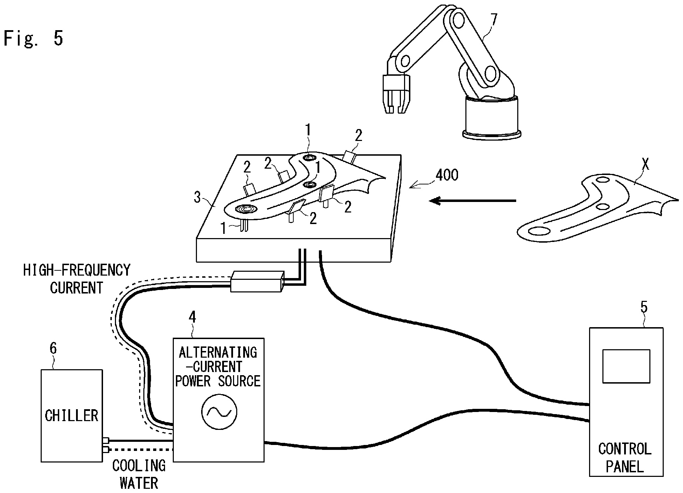

In a second embodiment, the steel plate formed product punched in the punching step is disposed on a heating jig in the heating step and heated. Fig. 5 is a diagram showing an example of a heating jig.

As shown in Fig. 5, the heating jig 400 includes the heating coil 1 for heating the trim edge 103 of the steel plate formed product X, a positioning guide 2 for positioning the steel plate formed product X in a predetermined position, and a base part 3. The alternating-current power source 4 for supplying electric power to each heating coil 1 is connected to the heating coils 2. A control panel 5 for controlling the alternating-current power source 4 is connected to the alternating-current power source 4.

The coil wire 11 of the heating coil 1 may be configured in a form of a pipe, and cooling liquid may flow therethrough. In this case, a chiller 6 may cool the heating coil 1 by supplying cooling liquid into the coil wire 11 of the heating coil 1.

The shape and arrangement of the positioning guide 2 are set so that the position of the steel plate formed product X is automatically set just by placing the steel plate formed product X on the positioning guide 2. A conveyance robot 7 may be configured to hold the steel plate formed product X and place it on the positioning guide. The heating coil 1 and the positioning guide 2 are arranged on the base part 3 corresponding to the shape of the steel plate formed product X and the position of the heating part.

The position, number, and shape of the heating coils 1 are not limited to the example shown in Fig. 5 and can be configured in any way. Similarly, the position, number, and shape of the positioning guide 2 are not limited to the example shown in Fig. 5 and can be configured in any way.

By using the heating jig 400 according to this embodiment, it is not necessary to perform heating from the vertical direction while the steel plate formed product X is held as in the method according to related art, and the steel plate formed product X can be simply disposed on the heating jig 400 and then heated.

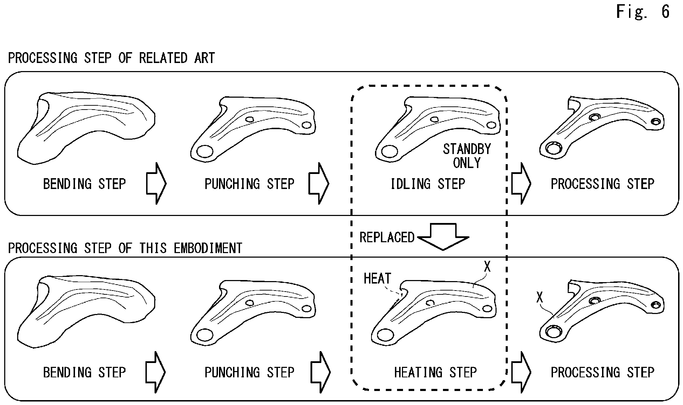

As shown in Fig. 6, the heating step according to this embodiment may be carried out in an idling step between the punching step and the processing step. The idling step is for adjusting a conveying pitch when the steel plate formed product X is conveyed from a place where the punching step is performed to a place where the processing step is performed, and is a standby step without processing.

This makes it possible to efficiently heat the steel plate formed product X by using the idling step, which has been making the punched steel plate formed product X wait after the punching step and before the processing step. Therefore, there is no need to introduce an additional heating step, thus improving productivity.

In a pressing machine, for example, the processing step, the punching step, and the idling step are continuously carried out at a predetermined conveying pitch while the steel plate formed product X is continuously conveyed. Therefore, the idling step in the pressing machine can be easily replaced by the heating step by simply placing the heating jig 400 at the position corresponding to the position at which the idling step is performed.

The heating step may be carried out during any step other than the idling step of the processing method in the pressing machine, for example, during the processing step or during the punching step, if the heating jig 400 can be disposed.

Although some of the embodiments of the disclosure have been described, these are presented as examples and are not intended to limit the scope of the disclosure. These new embodiments can be implemented in various other forms, and various omissions, replacements, and modifications can be made to the extent that they do not deviate from the scope of the disclosure. These embodiments and their variations are included in the scope and scope of the disclosure, as well as in the equal scope of the disclosure described in the claims.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A processing method, comprising:
punching a steel plate (100); and
heating an end face of a heating coil (1) by disposing the heating coil (1) in a non-contact manner along an end surface of a trim edge of the steel plate (100) formed in the punching and perpendicular to a plate thickness direction of the steel plate (100) and applying a current through the heating coil (1) to cause an induced electromotive force on the steel plate (100),
wherein the heating coil (1) is configured by winding a coil wire (11) spirally at least one time.

2. The processing method according to claim 1, wherein a distance between the heating coil (1) and the steel plate (100) is smaller than a diameter of the coil wire (11).

3. The processing method according to claim 1, wherein the diameter of the coil wire (11) of the heating coil (1) is larger than the thickness of the steel plate (100).

4. The processing method according to claim 1, wherein
a hole (101) is formed in the steel plate (100) by punching the steel plate (100) in the punching, and
a winding start position of the heating coil (1) and a winding end position of the heating coil (1) are located on a line passing through a center of the hole (101) and on the same side with respect to the center.

5. The processing method according to claim 1, wherein
a hole (101) is formed in the steel plate (100) by punching the steel plate (100) in the punching, and
an outer diameter of the heating coil (1) is larger than a diameter of the hole (101) of the steel plate (100).
